# EUROPÄISCHE PATENTSCHRIFT

(11) **EP 3 548 245 B1**
(45) Veröffentlichungstag und Bekanntmachung des Hinweises auf die Patenterteilung: **30.07.2025**
(21) Anmeldenummer: 17809263.1
(22) Anmeldetag: 01.12.2017
(51) Int. Cl.: B29C 44/44, B29C 44/58, B29C 33/30, B29K 105/04, B29C 35/08

(54) **CRACKSPALT-FORMWERKZEUG ZUM HERSTELLEN EINES PARTIKELSCHAUMSTOFFTEILS SOWIE VORRICHTUNG ZUM HERSTELLEN EINES PARTIKELSCHAUMSTOFFTEILS**
CRACK-SPLIT MOULDING TOOL FOR PRODUCING A FOAM PARTICLE PART AND DEVICE FOR PRODUCING A FOAM PARTICLE PART
MOULE POUR INJECTION-COMPRESSION, POUR LA FABRICATION D'UNE PIÈCE EN MOUSSE DE PARTICULES EXPANSÉES AINSI QUE DISPOSITIF POUR PRODUIRE UNE PIÈCE EN MOUSSE DE PARTICULES EXPANSÉES

(30) Priorität: 01.12.2016 DE 102016123214; 24.11.2017 DE 202017107149 U
(43) Veröffentlichungstag der Anmeldung: 09.10.2019
(73) Patentinhaber: Kurtz GmbH & Co. KG, 97892 Kreuzwertheim (DE)
(72) Erfinder: REUBER, Norbert, 97851 Bergrothenfels (DE); KEMMER, Constantin, 97828 Marktheidenfeld (DE); ROMANOV, Victor, 97877 Wertheim (DE)
(74) Vertreter: HGF
(86) Internationale Anmeldenummer: PCT/EP2017/081210
(87) Internationale Veröffentlichungsnummer: WO 2018/100169

(56) Entgegenhaltungen:
- EP-A1- 1 259 365
- EP-A2- 2 556 938
- CH-A- 472 959
- DE-U1- 202004 003 679
- JP-A- 2000 334 763
- JP-A- H0 740 358
- JP-A- H02 283 429
- JP-A- H06 320 634
- JP-A- S54 144 470
- US-A- 3 264 381
- US-A- 4 266 928
- US-A- 5 248 459
- US-B1- 6 220 842

## Beschreibung

Die vorliegende Erfindung betrifft ein Crackspalt-Formwerkzeug zum Herstellen eines Partikelschaumstoffteils sowie eine Vorrichtung zum Herstellen eines Partikelschaumstoffteils.

Aus der WO 2014/128214 A1 geht eine gemäß dem Oberbegriff des Anspruchs 1 und ein Verfahren gemäß dem Oberbegriff des Anspruchs 14 hervor.

Hierbei werden Schaumstoffpartikel von einem Materialbehälter mittels einer Leitung zu einem Formwerkzeug gefördert, indem die Schaumstoffpartikel zum Partikelschaumstoffteil unter Zuführung von Wärme thermoplastisch verschweißt werden. Die Wärmezuführung erfolgt hierbei mittels gesättigten Trockendampf.

Weiterhin gibt es unterschiedliche Versuche und Entwicklungen, die Wärme mittels elektromagnetischer Wellen zuzuführen, um Schaumstoffpartikel miteinander zu verschweißen. Beispielhaft wird auf die WO 2013/05081 A1, US 3,060,513, US 3,242,238, GB 1,403,326, WO 01/64414 A1 und die US 5,128,073 verwiesen.

Aus der DE 20 2004 003 679 U1 geht ein Werkzeug zum Schäumen von Dämmplatten hervor. Dieses Werkzeug weist zwei Formhälften auf. Jede Formhälfte besitzt einen Formrahmen, in welchem ein Formboden angeordnet ist. Der Formboden ist mittels einer Verstelleinrichtung relativ zum Formrahmen verschiebbar. Hierdurch kann das Volumen eines durch die Formhälften begrenzten Formnests eingestellt werden. Die Formböden können aus elastischen Platten ausgebildet sein, sodass sie verformbar sind.

Aus der US 3,264,381 geht ein Formwerkzeug zum Herstellen von Partikelschaumstoff-teilen hervor, das zwei Formhälften aufweist. Eine Formhälfte ist als Stempel ausgebildet, welche in die andere Formhälfte, welche einen einseitig offenen Hohlraum belegt, verfahrbar angeordnet ist. Hierdurch kann ein Formnest mit unterschiedlichem Volumen begrenzt wer-den. Mit diesem Werkzeug sollen Partikelschaumstoffteile mit geringer Dichte hergestellt werden. Hierzu werden die Schaumstoffpartikel zunächst in einer ersten Position der stempelförmigen Formhälfte verschweißt. Danach wird das Volumen des Formnests durch Zurück-ziehen der stempelförmigen Formhälfte vergrößert. Hierdurch kann das schon verschweißte Partikelschaumstoffteil expandieren und ein größeres Volumen einnehmen.

Aus der WO 2014/128214 A1 ist es auch bekannt, als Formwerkzeug ein so genanntes Crack-Spalt-Formwerkzeug zu verwenden, dessen Formraum ein variables Volumen aufweist. Bei einem solchen Crack-Spalt-Formwerkzeug werden zwei Formhälften, die einen Formraum begrenzen, zunächst mit einem vorbestimmten Abstand zueinander angeordnet. In dieser Crack-Spalt-Stellung wird das Formwerkzeug mit Schaumstoffpartikeln gefüllt. Danach werden die Formhälften des Crack-Spalt-Formwerkzeuges ein Stück zusammengedrückt, wodurch die darin befindlichen Schaumstoffpartikel komprimiert werden. In diesem komprimierten Zustand werden die Schaumstoffpartikel miteinander verschweißt.

Mit einem solchen Crack-Spalt-Formwerkzeug können Partikelschaumstoffteile mit hoher Dichte erzeugt werden. Insbesondere werden durch das Komprimieren die Zwickelvolumen zwischen den einzelnen Schaumstoffpartikeln verringert und insbesondere vergleichmäßigt, so dass ein homogenes Partikelschaumstoffteil herstellbar ist.

Aus der DE 10 2013 110 242 A1 geht ein Crackspalt-Formwerkzeug mit einer aus mehreren Sektionen bestehenden Formhälfte hervor, welche getrennt voneinander betätigt werden können, um den Formraum unterschiedlich stark zu verdichten.

Der Erfindung liegt die Aufgabe zugrunde, ein Crack-Spalt-Formwerkzeug derart weiterzubilden, dass sehr homogene Partikelschaumstoffteile mit insbesondere gleichmäßiger Dichte herstellbar sind.

Die Erfindung wird durch ein Crack-Spalt-Formwerkzeug mit den Merkmalen des Anspruchs 1 gelöst. Vorteilhafte Ausgestaltungen sind in den Unteransprüchen angegeben.

Ein Crack-Spalt-Formwerkzeug zum Herstellen eines Partikelschaumstoffteils gemäß der vorliegenden Erfindung umfasst zwei Formhälften, welche zum Befüllen des Formwerkzeuges mit Schaumstoffpartikeln in einer Crack-Spalt-Stellung anordbar sind, bei welcher die Formhälften gegenüber einer geschlossenen Stellung etwas voneinander beabstandet sind, und vor dem Verschweißen von darin befindlichen Schaumstoffpartikeln zusammendrückbar ausgebildet sind. Das Crack-Spalt-Formwerkzeug zeichnet sich dadurch aus, dass die Formhälften derart zueinander beweglich und insbesondere schwenkbar angeordnet sind, dass sie beim Füllen mit Schaumstoffpartikeln bereichsweise unterschiedlich weit voneinander beabstandet sind, so dass beim Zusammendrücken in die geschlossene Stellung die Formhälften durch eine Schwenkbewegung bereichsweise unterschiedlich weit zusammengefahren werden.

Mit diesem Crack-Spalt-Formwerkzeug können Bereiche des herzustellenden Partikelschaumstoffteils vor dem Verschweißen unterschiedlich stark mit einer Schwenkbewegung zusammengedrückt werden. Hierdurch ist es möglich, dass vor allem unterschiedlich dicke Bereiche eines bspw. etwa keilförmigen Partikelschaumstoffteils unterschiedlich stark beim Übergang von der Crack-Spalt-Stellung in die geschlossene Stellung unterschiedlich stark zusammengedrückt werden. Insbesondere kann das Zusammendrücken derart eingestellt werden, dass der Weg, den das Teil oder die gesamte Formhälfte beim Übergang von der Crack-Spalt-Stellung auf die geschlossene Stellung zurücklegt, etwa proportional zur jeweiligen Dicke des Partikelschaumstoffteils ist. Hierdurch wird eine etwa gleichmäßige Komprimierung des Partikelschaumstoffteils über seine gesamte Ausdehnung erzielt. Dies erlaubt eine homogene Ausgestaltung des Partikelschaumstoffteils, auch wenn dieses eine keilförmige Form oder eine Form mit Bereichen unterschiedlicher Dicke aufweist.

Im Rahmen der Erfindung ist es auch möglich, gezielt Bereiche unterschiedlich stark zu komprimieren. Es kann beispielsweise der Fall vorliegen, dass ein Partikelschaumstoffteil herzustellen ist, was bereichsweise sehr stark belastet wird und in diesen Bereichen eine höhere Packung von Partikelschaumstoffpartikeln vorzusehen ist. Ein derartiges Partikelschaumstoffteil kann erzielt werden, indem die Bereiche, in denen Schaumstoffpartikel mit einer höheren Dichte vorzusehen sind, relativ stärker als die übrigen Bereiche komprimiert werden, d.h., dass der Verschiebeweg des Teils der Formhälfte oder der gesamten Formhälfte in diesem Bereich in Relation zur Dicke des Partikelschaumstoffteils in diesem Bereich größer als in den übrigen Bereichen ist.

Eine der beiden Formhälften ist um eine Schwenkachse schwenkbar gelagert sein, so dass beim Zusammendrücken von der Crack-Spalt-Stellung in die geschlossene Stellung diese Formhälfte die Schwenkbewegung ausführt. Die Schwenkachse ist vorzugsweise exzentrisch bezüglich der Formhälfte angeordnet. Mit einer solchen schwenkbaren Formhälfte können keilförmige Partikelschaumstoffteile einfach mit gleichmäßiger Dichte an Schaumstoffpartikeln hergestellt werden. Die Schwenkachse ist vorzugsweise parallel zu einer Ebene, welche senkrecht zur Richtung steht, mit welcher der Übergang von der Crack-Spalt-Stellung in die geschlossene Stellung zumindest eine der beiden Formhälften in Richtung zur anderen Formhälfte bewegt wird.

Mit einer solchen Schwenkbewegung kann einerseits ein etwa keilförmiges Partikelschaumstoffteil gleichmäßig komprimiert werden oder grundsätzlich in einem Partikelschaumstoffteil eine sich entlang einer Richtung etwa gleichmäßig verändernde Komprimierung der Schaumstoffpartikel eingestellt werden.

Das Formwerkzeug weist vorzugsweise ein Schwenkelement auf, das um einen vorbestimmten Schwenkbereich um die Schwenkachse schwenkbar ist, wobei an dem Schwenkelement die bewegliche Formhälfte befestigt ist. Das Schwenkelement kann mit einem Schwenkbereichsbegrenzungselement zur Begrenzung des Schwenkbereichs vorgesehen sein. Das Schwenkbereichsbegrenzungselement kann derart einstellbar ausgebildet sein, dass der maximale Schwenkbereich einstellbar ist.

Eine der beiden Formhälften kann aus zwei separaten Teilen ausgebildet sein, die in der Crack-Spalt-Stellung einen unterschiedlichen Abstand gegenüber der geschlossenen Stellung einnehmen können. Die separaten Teile können damit auf unterschiedlichem Weg von der Crack-Spalt-Stellung in die geschlossene Stellung gebracht werden und somit die unterschiedlichen Bereiche des Partikelschaumstoffteils unterschiedlich stark komprimieren. Die eine oder die beiden Formhälften können auch aus mehr als zwei separaten Teilen ausgebildet sein, die in der Crack-Spalt-Stellung unabhängig voneinander mit unterschiedlichen Abstand zur jeweils anderen Formhälfte anordbar sind.

Vorzugsweise sind die beiden Formhälften jeweils auf einer Aufspannplatte angeordnet, wobei zumindest ein Teil einer der beiden Formhälften beweglich gegenüber der entsprechenden Aufspannplatte ausgebildet ist.

Zwischen den Aufspannplatten können federbeaufschlagte Abstandselemente vorgesehen sein, mit welchen die Aufspannplatten mittels der Federwirkung der Abstandselemente derart auf Abstand gehalten werden können, dass sich die beiden Formhälften in der Crack-Spalt-Stellung befinden. Die Aufspannplatten können entgegen der Federwirkung der Abstandselemente zusammengedrückt werden, so dass die Formhälften in die geschlossene Stellung des Formwerkzeuges gebracht werden. Hierbei können Teile der Formhälften um einen unterschiedlichen Bewegungsweg bewegt werden.

Eine der beiden Formhälften kann beispielsweise mittels eines Schwenkgelenks mit der entsprechenden Aufspannplatte verbunden sein.

Das bewegliche Teil der Formhälfte kann gegenüber der entsprechenden Aufspannplatte frei beweglich innerhalb eines vorbestimmten Bewegungsbereichs angeordnet sein. Bei einer solchen Ausbildung wird diese Formhälfte als obere Formhälfte verwendet, sodass sie aufgrund der Gewichtskraft in der Crackspaltstellung einen von der Aufspannplatte größeren Abstand als in der geschlossenen Stellung des Formwerkzeugs einnehmen. Das oder die beweglichen Teile werden somit bei dieser Ausführungsform alleine aufgrund der Gewichtskraft in der Crackspaltstellung ein Stück abgesenkt.

Zwischen dem oder den beweglichen Teilen und der entsprechenden Aufspannplatte kann auch ein Federelement angeordnet sein, welche das bzw. die beweglichen Teile weg von der Aufspannplatte drückt. Eine solche Formhälfte kann auch als untere Formhälfte eines Formwerkzeugs verwendet werden, wobei in der Crackspaltstellung das oder die beweglichen Teile der Formhälfte von der entsprechenden Aufspannplatte weg gedrückt werden. Eine solche Ausbildung der Formhälften kann auch für ein Crackspalt-Formwerkzeug verwendet werden, bei welchen die beiden Formhälften etwa vertikal angeordnet sind.

Eine der beiden Formhälften kann einen Abschnitt mit einer Durchgangsöffnung aufweisen, der in der Crackspaltstellung einen zwischen den beiden Formhälften ausgebildeten Hohlraum begrenzt und in der geschlossenen Stellung des Crackspalt-Formwerkzeugs außen an der anderen Formhälfte anliegt. Diese Durchgangsöffnung bildet somit in der Crackspaltstellung einen freien Durchgang in den Hohlraum und in der geschlossenen Stellung ist diese Durchgangsöffnung verschlossen. Eine solche Durchgangsöffnung kann zum Zuführen von Schaumstoffpartikeln und/oder zum Entweichen von Luft ausgebildet sein. Es können auch mehrere Durchgangsöffnungen vorgesehen sein, wobei mittels einer Durchgangsöffnung Schaumstoffpartikel zugeführt und mittels der anderen Durchgangsöffnung Luft entweichen kann.

Die Durchgangsöffnungen werden automatisch beim Übergang von der Crackspaltstellung in die geschlossene Stellung des Crackspalt-Formwerkzeugs geschlossen. Hierdurch ist es nicht notwendig einen zusätzlichen Schließmechanismus vorzusehen, der somit weggelassen werden kann. An dieses Formwerkzeug kann somit unmittelbar eine Zuführleitung zum Zuführen von Schaumstoffpartikeln angeschlossen werden, ohne dass hierzu ein Füllinjektor vorgesehen ist. Ein solcher Füllinjektor ist z. B. aus der WO 2015/091906 A1 bekannt, auf welche hiermit vollinhaltlich Bezug genommen wird.

Eine Vorrichtung zum Herstellen eines Partikelschaumstoffteils umfasst ein Crackspalt-Formwerkzeug, wie es oben erläutert ist, eine Fördereinrichtung zum Zuführen von Schaumstoffpartikeln zum Crackspalt-Formwerkzeug und eine Heizeinrichtung zum Erhitzen der Schamstoffpartikel im Crackspalt-Formwerkzeug, sodass diese miteinander verschweißen. Die Heizeinrichtung kann eine Strahlungsquelle für elektromagnetische Strahlung sein. Insbesondere kann die Strahlungsquelle eine Strahlungsquelle für RF-Strahlung sein. Das Formwerkzeug ist dann vorzugsweise zumindest an den Bereichen zwischen dem Formraum und der Strahlungsquelle aus Materialien ausgebildet, welche für die elektromagnetische Strahlung transparent oder im Wesentlichen transparent sind. Die Formhälften können an ihren Oberflächen, welche den Formraum begrenzen, aus einem Material ausgebildet sein, das einen Teil der elektromagnetischen Strahlen absorbiert, sodass sich die Oberflächen der Formhälften beim Anlegen der elektromagnetischen Strahlung erwärmen.

Die Heizeinrichtung kann auch eine Einrichtung zum Erzeugen und Zuführen vom Dampf zum Crackspalt-Formwerkzeug sein. Der Dampf ist vorzugsweise ein gesättigter Trockendampf.

Nach einem weiteren Aspekt der vorliegenden Offenbarung wird ein Partikelschaumstoffteil mit etwa keilförmigen Körper vorgesehen, bei welchen die Schaumstoffpartikel über den gesamten Körper des Partikelschaumstoffteils in etwa die gleiche Dichte aufweisen.

Das Partikelschaumstoffteil ist vorzugsweise unter Verwendung eines oben erläuterten Werkzeuges hergestellt.

Die Erfindung wird beispielhaft näher anhand der Zeichnungen erläutert. Die Zeichnungen zeigen in:
- Figur 1a, 1b: ein erstes Ausführungsbeispiel eines Crackspalt-Formwerkzeuges mit zwei Formhälften in Schnittansichten in einer geschlossenen Stellung und in einer Crackspalt-Stellung,
- Figur 2a-2f: ein Crackspalt-Formwerkzeug mit zwei Formhälften, die voneinander getrennt angeordnet sind in einer Seitenansicht, Frontansicht, perspektivischen Ansicht, Draufsicht und zwei Schnittansichten, wobei die Schnittansicht gemäß Fig. 2e entlang der Linie A-A und gemäß Fig. 2f entlang der Linie B-B in Fig. 2d verläuft,
- Figur 3a, 3b: das Crackspalt-Formwerkzeug gemäß den Figuren 1a bis 1f in einer Crack-spalt-Stellung in zwei Schnittansichten,
- Figur 4a-4c: das Crackspalt-Formwerkzeug gemäß den Figuren 1a bis 1f in einer geschlossenen Stellung in einer perspektivischen Ansicht und in zwei Schnittansichten,
- Figur 5: schematisch ein Crackspalt-Formwerkzeug, bei welchem Dampf zum Verschweißen von Schaumstoffpartikeln in einen Formraum zugeführt werden kann in einer Schnittansicht, und
- Figur 6: schematisch eine Vorrichtung zur Herstellung von Partikelschaumstoffteilen mit einem RF-Generator,
- Figur 7, 8: jeweils eine Verriegelungsleiste in der Draufsicht,
- Figur 9a, 9b: eine Matrizen-Formhälfte mit einem Schieber zum Schließen einer Einfüllöffnung in einer perspektivischen Ansicht und einer perspektivischen Explosionsdarstellung, und
- Figur 10: den Schieber aus Figur 9a und 9b in einer perspektivischen Ansicht.

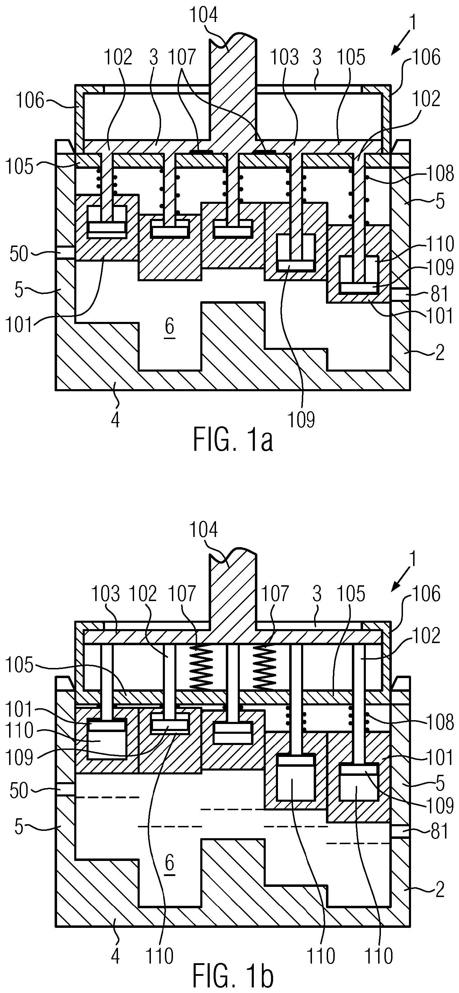

Ein erstes Ausführungsbeispiel eines erfindungsgemäßen Crackspalt-Formwerkzeugs 1 zum Herstellen eines Partikelschaumstoffteils weist zwei Formhälften 2, 3 auf. Die Formhälfte 2 ist aus einer Bodenwandung 4 und einer umlaufenden Seitenwandung 5 ausgebildet **(****Figur 1a**,**1b**). Die andere Formhälfte 3 ist als eine Art Stempel ausgebildet, welcher mit geringem Spiel in den durch die umlaufende Seitenwandung 5 begrenzten Bereich eingeführt werden kann, sodass zwischen den beiden Formhälften 2, 3 ein Formraum 6 begrenzt ist. Die Formhälfte 3 wird deshalb als Stempel-Formhälfte 3 und die Formhälfte 2 als Matrizen-Formhälfte 2 bezeichnet.

Die Stempel-Formhälfte 3 weist mehrere Einzelstempel 101 auf, welche jeweils mittels eines Betätigungsstempels 102 an eine Betätigungsplatte 103 gekoppelt sind. Die Betätigungsplatte 103 ist mit einer Kolbenstange 104 einer Presse verbunden, um die Stempel-Formhälfte 3 bezüglich der Matrizen- Formhälfte 2 zu bewegen und insbesondere die Stempel- Formhälfte 3 in die Matrizen- Formhälfte 2 einzuführen.

Im Bereich zwischen den Einzelstempeln 101 und der Betätigungsplatte 103 befindet sich eine Gegenplatte 105, welche Durchgangslöcher aufweist, durch welche sich jeweils einer der Betätigungsstempel 102 erstreckt. Die Gegenplatte 105 besitzt einen sich in Richtung zur Betätigungsplatte 103 erstreckenden Rahmen 106, der die Betätigungsplatte 103 derart umgreift, dass die Gegenplatte 105 und die Betätigungsplatte 103, die parallel zueinander angeordnet sind, zueinander beweglich sind, wobei der maximale Bewegungsweg durch den Rahmen 106 begrenzt ist.

Die Betätigungsstempel 102 sind mit einem Ende an der Betätigungsplatte 103 angebunden und erstrecken sich mit ihrer Längsrichtung senkrecht zur Ebene der Betätigungsplatte 103. Die Gegenplatte ist bezüglich der Betätigungsplatte 103 in Längsrichtung der Betätigungsstempel 102 beweglich.

Zwischen der Betätigungsplatte 103 und der Gegenplatte 105 sind Federelemente 107 vorgesehen, welche die beiden Platten 103, 105 auseinanderdrücken.

Zwischen dem jeweiligen Einzelstempel 101 und der Gegenplatte 105 ist jeweils ein weiteres Federelement 108 vorgesehen, das die Einzelstempel 101 und die Gegenplatte 105 auseinanderdrückt. Das Federelement 108 ist vorzugsweise eine Spiralfeder, wobei sich jeweils einer de Betätigungsstempel 102 durch den Innenbereich der Spiralfeder hindurch erstreckt.

Die Betätigungsstempel 102 weisen an ihrem von der Betätigungsplatte 103 entfernten Ende jeweils einen Betätigungskolben 109 auf, der jeweils in einem Zylinderraum 110 lagert, welcher jeweils in einem der Einzelstempel 101 ausgebildet ist. Der Zylinderraum 110 ist so ausgebildet, dass der Betätigungskolben 109 hierin mit geringem Spiel gelagert ist, sodass der Betätigungskolben 109 im Zylinderraum 110 zwischen zwei Einstellungen verschoben werden kann.

An der Seitenwandung 5 ist eine Einfüllöffnung 50 zum Zuführen von Schaumstoffpartikeln in den Formraum 6 ausgebildet.

Weiterhin kann noch eine Entlüftungsöffnung 81 an der Seitenwandung 5 vorgesehen sein, aus welcher beim Befüllen des Formraums 6 die Luft entweichen kann.

Das Formwerkzeug wird im Betrieb in grundsätzlich in drei unterschiedlichen Stellungen eingesetzt, eine Stellung (nicht dargestellt), in welcher die beiden Formhälften 2, 3 vollständig voneinander getrennt sind, sodass ein mit dem Formwerkzeug hergestelltes Partikelschaumstoffteil entformt werden kann, eine Crackspalt-Stellung **(****Figur 1b****),** in welcher das Stempel-Formwerkzeug 3 so weit in das Matrizen-Formwerkzeug 2 eingeführt ist, dass der Formraum 6 geschlossen ist, jedoch der Formraum 6 noch nicht auf sein endgültiges Volumen in der geschlossenen Stellung **(****Figur 1a****)** verringert ist.

In der Crackspalt-Stellung sind die Einfüllöffnung und die Entlüftungsöffnung 81 nicht vom Stempel-Formwerkzeug 3 abgedeckt, sodass diese Durchgangsöffnungen 50, 81 mit dem Formraum 6 kommunizieren und Schaumstoffpartikel eingefüllt bzw. Luft abgeführt werden können. In der Crackspalt-Stellung sind aufgrund der Federelemente 107 die Betätigungsplatte 103 und die Gegenplatte 105 auseinandergedrückt und weisen zueinander den maximalen Abstand auf. Weiterhin sind die Einzelstempel 101 durch die Federelemente 108 von der Gegenplatte 105 weggedrückt, sodass die Betätigungskolben 109 an den Einzelstempeln 101 jeweils an der zur Gegenplatte 105 weisenden Wandung der Einzelstempel 101 anschlagen. Die Einzelstempel 101 befinden sich somit in der maximal entfernten Stellung bezüglich der Betätigungsplatte 103. Diese maximal entfernte Position wird durch den Betätigungskolben 109 im Zylinderraum 110 begrenzt.

In der Crackspalt-Stellung wird der Formraum 6 mit Schaumstoffpartikeln gefüllt. Danach wird die Stempel-Formhälfte 3 ein Stück weiter in die Matrizen-Formhälfte 2 eingedrückt, wobei die darin befindlichen Schaumstoffpartikel komprimiert werden. Durch den hierbei erzeugten Druck werden die Einzelstempel 101 in Richtung zur Gegenplatte 105 bzw. Betätigungsplatte 103 gedrückt. Hierdurch bewegen sich die Einzelstempel 101 bezüglich dem jeweiligen Betätigungsstempel 102 so, dass die Betätigungskolben 109 an der weg von der betätigungsplatte 103 weisenden Wandung der jeweiligen Einzelstempel 101 anschlagen **(****Figur** 1a**).** Die jeweiligen Einzelstempel 101 werden somit durch jeweils einen der Betätigungsstempel 102 gegen die Schaumstoffpartikel gedrückt.

Der Weg, den die Einzelstempel 101 beim Übergang von der Crackspalt-Stellung auf die geschlossene Stellung zurücklegen, ist somit der Weg, den die Betätigungsplatte 103 abzüglich des freien Wegs des jeweiligen Betätigungskolbens 109 im Zylinderraum 110 zurücklegt. Je weiter sich der Zylinderraum 110 in Bewegungsrichtung der Betätigungskolben 109 bezüglich der Einzelstempel 101 erstreckt, desto kürzer ist der Bewegungsweg der einzelnen Einzelstempel 101 beim Übergang von der Crackspalt-Stellung in die geschlossene Stellung. Hierdurch können die Schaumstoffpartikel in den einzelnen Bereichen des Formraums um einen unterschiedlichen Weg verdichtet werden. Wenn dieser Verdichtungsweg proportional zur Dicke des herzustellenden Partikelschaumstoffteils im jeweiligen Bereich ist, dann kann man eine gleichmäßige Verdichtung im gesamten Partikelschaumstoffteil erhalten, obwohl es unterschiedliche Dicken aufweist. Es ist jedoch auch möglich, gezielt unterschiedliche Verdichtungen der Schaumstoffpartikel herbeizuführen, um z. B. in dünnwandigen Abschnitten eine besonders hohe Festigkeit zu erzielen. In Figur 1b sind die Positionen der Einzelstempel in der Endstellung jeweils durch eine gestrichelte Linie dargestellt.

Die Schaumstoffpartikel können mit diesem Werkzeug mittels elektromagnetischer Wellen, insbesondere RF-Strahlung, verschweißt werden. Hierfür ist es zweckmäßig, wenn die Formhälften 2, 3 aus einem elektrisch leitenden Material ausgebildet sind, sodass sie als Kondensatorplatten für das elektromagnetische Feld dienen können. Die Formhälften sind hierbei jedoch zumindest in den Bereichen, in welchen sie sich berühren, mit einer elektrisch isolierenden Schicht, insbesondere Kunststoffschicht, beschichtet. Vorzugsweise ist bei einer solchen Ausführungsform die umlaufende Seitenwandung 5 nicht elektrisch leitend, z.B. aus Kunststoff ausgebildet, sodass am Randbereich keine sehr kleinen Abstände zwischen den Kondensatorplatten entstehen, welche zu lokal sehr starken elektrischen Feldern führen würden.

Dieses Formwerkzeug kann jedoch auch zum Verschweißen der Schaumstoffpartikel mittels Dampf verwendet werden. Hierbei sind um die Formhälften entsprechende Dampfkammern und Durchlässe vorzusehen, sodass Dampf durch die Formhälften in den Formraum 6 eintreten kann.

Bei dem oben erläuterten Ausführungsbeispiel ist es grundsätzlich auch möglich, die Gegenplatte 105 wegzulassen.

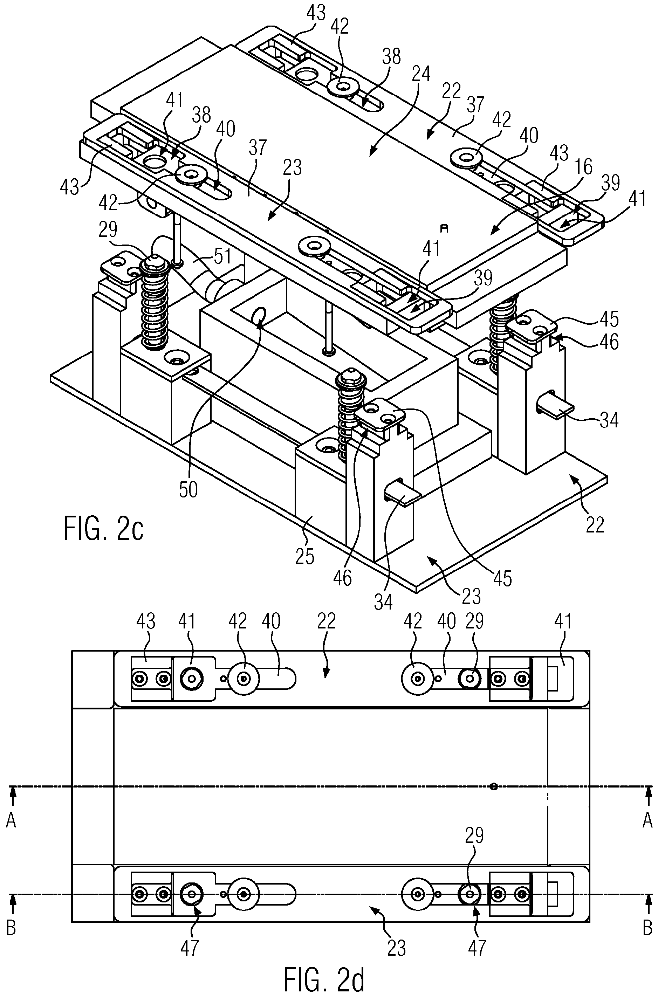

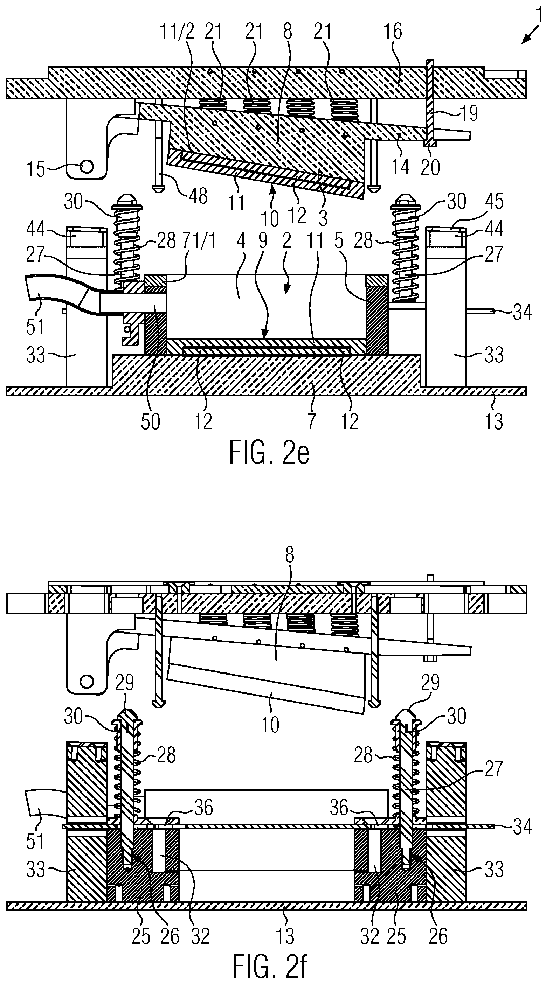

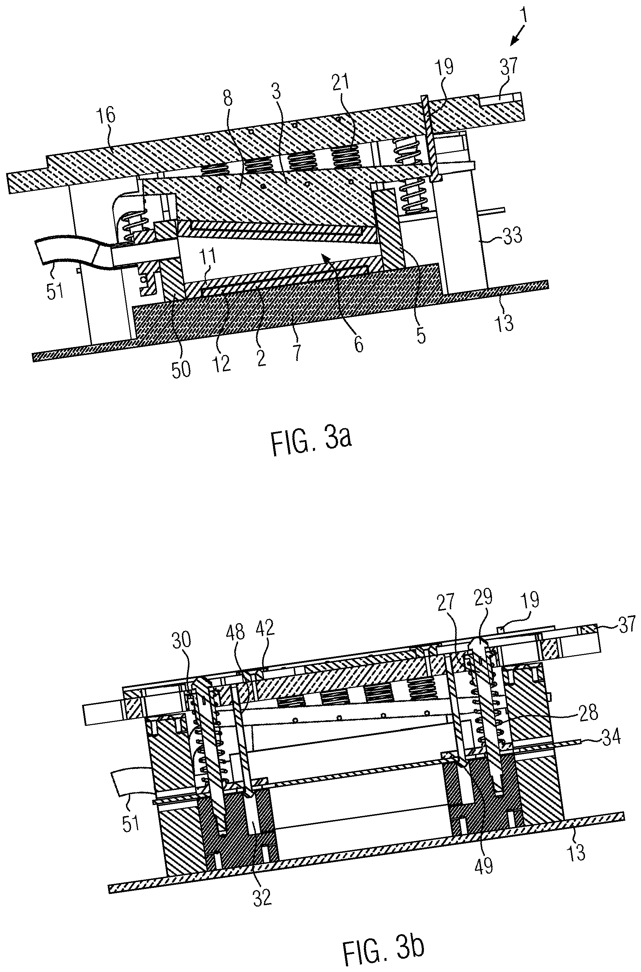

Ein weiteres Ausführungsbeispiel eines erfindungsgemäßen Crackspalt-Formwerkzeuges 1 zum Herstellen eines Partikelschaumstoffteils weist wiederum zwei Formhälften 2, 3 auf. Die Formhälfte 2 ist aus einer Bodenwandung 4 und einer umlaufenden Seitenwandung 5 ausgebildet (**Fig.** 2e). Die andere Formhälfte 3 ist als eine Art Stempel ausgebildet, welcher mit geringem Spiel in den durch die umlaufende Seitenwandung 5 begrenzten Bereich eingeführt werden kann, so dass zwischen den beiden Formhälften 2, 3 ein Formraum 6 begrenzt ist **(****Fig.** 3a). Die Formhälfte 3 wird deshalb im Folgenden als Stempel-Formhälfte 3 und die Formhälfte 2 als Matrizen-Formhälfte 2 bezeichnet. Beide Formhälften 2, 3 weisen einen Grundkörper 7, 8 aus einem elektrisch-leitenden Material, insbesondere Metall, auf. Die Grundkörper 7, 8 weisen im vorliegenden Ausführungsbeispiel jeweils eine ebenflächige, zum Formraum 6 weisende Oberfläche auf. Auf diesen Oberflächen ist jeweils ein Formkörper 9, 10 angeordnet, dessen den Formraum 6 begrenzende Oberfläche komplementär zu dem herzustellenden Partikelschaumstoffteil konturiert ist. Die Formkörper 9, 10 sind aus einem dielektrischen Material ausgebildet. Grundsätzlich können sie aus mehreren Materialschichten ausgebildet sein, wobei es insbesondere zweckmäßig ist, dass eine äußere Schicht, welche einen Mantel 11 bildet, der unmittelbar den Formraum 6 begrenzt, elektromagnetische Strahlung, insbesondere RF-Strahlung, zu einem gewissen Grad absorbiert und die vom Formraum 6 entfernte Schicht, die einen Kern 12 bildet, der für diese Strahlung im Wesentlichen vollständig transparent ist. Im vorliegenden Ausführungsbeispiel sind die Formkörper 9, 10 somit aus einem elektromagnetische Strahlung absorbierenden Mantel 11 und aus einem für elektromagnetische Strahlung transparenten Kern 12 ausgebildet. Der Kern 12 und der ihn umgebende Mantel 11 haben vorzugsweise die gleiche Permittivität (Dielektrizitätskonstante). Durch diese Ausgestaltung der Formkörper 9, 10 wird einerseits ein homogenes elektrisches Feld an den Formraum 6 angelegt und andererseits erhitzt sich der Mantel 11, wenn elektromagnetische Strahlung angelegt wird, so dass auch im Bereich der Oberfläche eines herzustellenden Partikelschaumstoffteils ausreichend Wärme vorliegt.

Die umlaufende Seitenwandung 5 ist aus einem dielektrischen Material ausgebildet, das die elektromagnetische Strahlung absorbieren kann oder für diese transparent ist.

Das Spiel zwischen der Stempel-Formhälfte 3 und der umlaufenden Seitenwandung 5 der Matrizen-Formhälfte 2 ist kleiner als die Größe von einzelnen Schaumstoffpartikeln, welche mit dem Formwerkzeug zu einem Partikelschaumstoffteil verschweißt werden können. Die Seitenwandung 5 weist zumindest in dem Bereich, in welchen die Stempel-Formhälfte 3 in die Matrizen-Formhälfte 2 eintaucht, eine Innenfläche in der Form eines geraden Zylinders auf. Der übrige Bereich der Innenfläche der Seitenwandung 5 kann frei konturiert sein und eine komplementäre Kontur zu dem herzustellenden Partikelschaumstoffteil aufweisen.

Der Grundkörper 7 der Matrizen-Formhälfte 2 ist auf der vom Formraum 6 weg weisenden Seite einstückig mit einer Aufspannplatte 13 ausgebildet, welche sich in allen Richtungen ein Stück über die Formhälfte 2 bzw. den Bereich des Formraumes 6 hinaus erstreckt. Die Aufspannplatte 13 besitzt in der Draufsicht eine rechteckige Form.

Der Grundkörper 8 ist auf der vom Formraum 6 weg weisenden Seite einstückig mit einer Schwenkplatte 14 ausgebildet, die sich über den von der Seitenwandung 5 begrenzenden Formraum 6 hinaus erstreckt.

Die Schwenkplatte 14 ist an einer Schwenkachse 15 schwenkbar an einer weiteren Aufspannplatte 16 befestigt. Bezüglich dieser Aufspannplatte 16 ist die Stempel-Formhälfte 3 an der zur Matrizen-Formhälfte 2 weisenden Seite angeordnet. An der Aufspannplatte 16 und an der Schwenkplatte 14 sind korrespondierende Schwenkhebel 17, 18 ausgebildet, so dass die Schwenkachse 15 ein Stück von der Oberfläche der Aufspannplatte 16 in Richtung zur Matrizen-Formhälfte 2 versetzt ist. Die Position der Schwenkachse 15 ist so zu wählen, dass bei Benutzung des Crackspalt-Formwerkzeuges 1 eine gewünschte Verdichtung der Schaumstoffpartikel in den unterschiedlichen Bereichen aufgrund der Schwenkbewegung erfolgt.

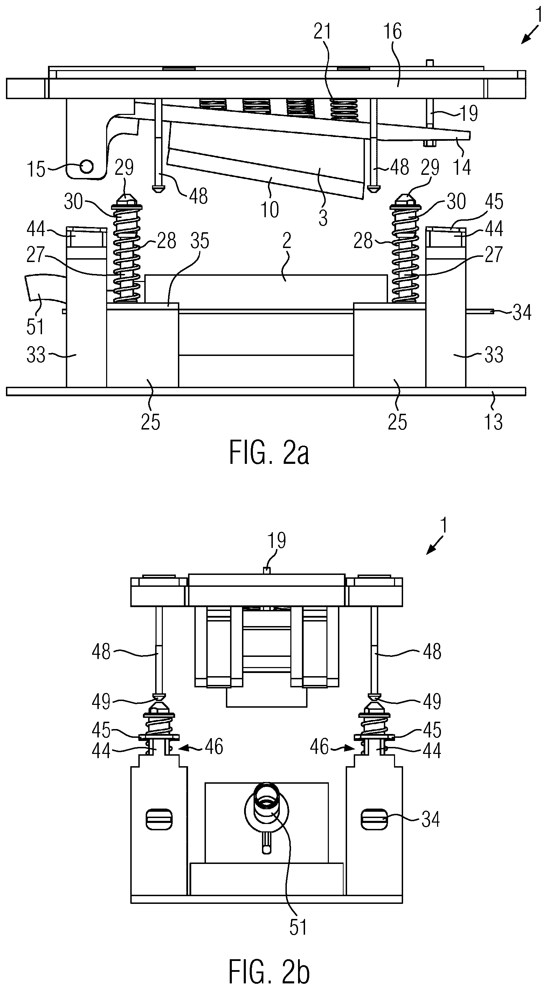

An dem von der Schwenkachse 15 entfernten Bereich der Schwenkplatte 14 bzw. Aufspannplatte 16 ist ein Schraubbolzen 19 in eine Bohrung der Aufspannplatte 16 derart eingeschraubt, dass er an der zum Formraum 6 weisenden Seite der Aufspannplatte 16 vorsteht und sich durch eine entsprechende schlitzförmigen Öffnung in der Schwenkplatte 14 erstreckt. Der Schraubbolzen 19 weist an seinem von der Aufspannplatte 16 entfernten Ende einen Bolzenkopf 20 auf, der in der Draufsicht größer als der entsprechende Durchgang in der Schwenkplatte 14 ist, so dass der Schwenkbereich der Schwenkplatte 14 bezüglich der Aufspannplatte 16 durch diesen Bolzenkopf 20 begrenzt ist. Dieser Schraubbolzen 19 bildet somit ein Schwenkbereich-Begrenzungselement. Der Schwenkbereich kann durch unterschiedlich starkes Einschrauben des Schraubbolzens 19 in die Aufspannplatte 16 verstellt werden. Der Schraubbolzen 19 kann auch etwas an der Aufspannplatte nach außen vorstehen, wie es bspw. in **Fig.** 2a und 2b gezeigt ist. Bei einer solchen Ausführung ist in einer Presse, mit welcher das Crackspalt-Formwerkzeug 1 zusammen gepresst wird, eine entsprechende Ausnehmung vorzusehen.

Im vorliegenden Ausführungsbeispiel sind zwischen der Aufspannplatte 16 und der Schwenkplatte 14 mehrere Federelemente 21 vorgesehen, welche die Schwenkplatte 14 und damit die Stempel-Formhälfte 3 von der Aufspannplatte 16 wegdrücken. Die Federelemente 21 sind Schraubenfedern, welche mit ihren jeweiligen Enden an der Aufspannplatte 16 bzw. Schwenkplatte 14 befestigt sind.

Wird die schwenkbar an einer der Aufspannplatten befestigte Formhälfte im Betrieb immer so angeordnet, dass sie oberhalb des Formraums ist, dann können auch die Federelemente entfallen, da die Formhälfte aufgrund der Schwerkraft nach unten und damit weg von der Aufspannplatte schwenkt. Die Verwendung von solchen Federelementen ist jedoch vorteilhaft, da die Federkraft durch Wahl geeigneter Federelemente einstellbar ist.

An zwei gegenüberliegenden Randbereichen 22, 23 der Aufspannplatten 13, 16 sind diverse Elemente zum Einstellen des Abstandes zwischen den beiden Aufspannplatten 13, 16 bzw. zwischen den Formhälften 2, 3 vorgesehen. Diese Elemente sind so ausgebildet, dass sie nicht oder nur wenig an einer zentralen Außenfläche 24 der Aufspannplatten vorstehen, so dass das Crackspalt-Formwerkzeug 1 an diesen zentralen Außenflächen der Aufspannplatten 13, 16 mit einer Presse zusammengedrückt werden kann **(****Fig.** 2c). Geringe Vorsprünge an der Aufspannplatte 16 können von einer Presse mit einer entsprechend konturierten Oberfläche aufgenommen werden. Eine solche konturierte Oberfläche einer Presse ist von Vorteil, um zu verhindern, dass die Aufspannplatten nach einem Pressvorgang an den Pressflächen haften.

An der unteren Aufspannplatte 13 sind an den Randbereichen 22, 23 jeweils zwei Sockel 25 befestigt. Die Sockel 25 weisen jeweils sacklochförmige Gewindebohrungen 26 zur Aufnahme eines Federstiftes 27 auf. Die Federstifte 27 sind jeweils mit einem Ende in die Gewindebohrung 26 eingeschraubt und ein jeder Federstift 27 wird von einer Schraubenfeder 28 umschlossen. Die Federstifte 27 besitzen an ihrem freien Ende einen Federstiftkopf 29. Eine Federstiftbuchse 30 umschließt den Federstift 27 und weist einen radial nach außen vorstehenden Kragen 31 auf, mit dem die Federstiftbuchse am Federstiftkopf 29 anliegt. Die Schraubenfedern 28 erstrecken sich zwischen dem Kragen 31 der Federstiftbuchse 30 und dem Sockel 25 und sind im unbelasteten Zustand vorgespannt.

Die Sockel 25 weisen weiterhin sacklochförmige Führungsbohrungen 32 auf **(****Fig. 2f****),** deren Mündungen zur oberen Aufspannplatte 16 bzw. zur Stempel-Formhälfte 3 weisen. Benachbart zu dem Sockel 25 sind Abstandssäulen 33 in den Randbereichen 22, 23 der unteren Aufspannplatte 13 angeordnet. Die Abstandssäulen 33 erstrecken sich von der unteren Aufspannplatte 13 ein Stück über die Sockel 25 in Richtung zur oberen Aufspannplatte 16. Die Abstandssäulen 33 stehen jedoch nicht so weit nach oben vor, wie die freien Enden der Federstifte 27.

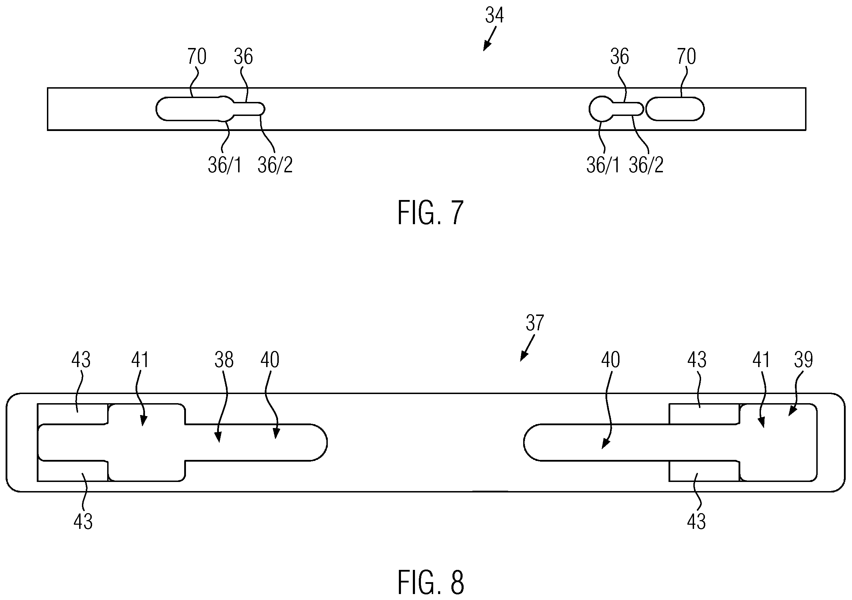

Auf der oberen bzw. von der unteren Aufspannplatte 13 wegweisenden Seite der Sockel 25 befindet sich in den Randbereichen 22, 23 jeweils eine Verriegelungsleiste 34. Die Verriegelungsleiste 34 ist aus einem schmalen Blechstreifen ausgebildet, und in einer entsprechenden Nut an den Sockeln 25 geführt. Die Sockel 25 weisen eine Abdeckung 35 auf, welche sich über die Verriegelungsleisten 34 hinweg erstreckt und diese so in der Nut hält. Die Führungsleisten 34 erstrecken sich durch korrespondierende Durchgangsöffnungen in den Abstandssäulen 33 und sind so lang ausgebildet, dass sie zumindest mit einem Ende in eine der Abstandssäulen 33 vorstehen. Die Verriegelungsleisten 34 sind in ihrer Längsrichtung verschieblich angeordnet, wobei sie im Bereich der Federstifte 27 jeweils Langlöcher 70 aufweisen, wobei die Länge der Langlöcher den maximalen Verschiebeweg der Verriegelungsleisten 34 festlegt. Weiterhin weisen die Führungsleisten 34 im Bereich der Führungsbohrungen 32 Verriegelungsdurchgangsöffnungen 36 auf, welche in der Draufsicht einen breiteren etwa kreisförmigen Bereich 36/1 und einen schmäleren länglichen Bereich 36/2 aufweisen, welche in Längsrichtung aufeinanderfolgend angeordnet sind **(****Figur 7****).** Der breitere Bereich 36/2 ist so breit, dass wenn dieser im Bereich der Führungsbohrungen 32 angeordnet ist, die Mündung der Führungsbohrung 32 vollständig frei liegt. Die schmäleren Bereiche 36/2 der Verriegelungsdurchgangsöffnung 36 sind schmäler als die lichte Weite der Führungsbohrungen 32. Wenn die Federstifte 27 zu den Führungsbohrungen 32 sehr nahe angeordnet sind, können das entsprechende Langloch 70 und die Verriegelungsdurchgangsöffnung 36 eine gemeinsame Ausnehmung ausbilden.

Im Bereich der Randbereiche 22, 23 ist an der oberen Aufspannplatte 16 eine weitere Verriegelungsleiste 37 angeordnet. Im Bereich der Verriegelungsleiste 37 ist die Außenseite der Aufspannplatte 16 stufenförmig abgesetzt, so dass die äußere Seite der Verriegelungsleiste 37 nicht an der zentralen Außenfläche 24 vorsteht **(****Figur 8****).**

Die Verriegelungsleisten 37 sind als schmale Blechstreifen ausgebildet. Sie weisen jeweils zwei Durchgangsöffnungen 38, 39 auf, welche in der Draufsicht einen schmalen Öffnungsbereich 40 und einen breiten Öffnungsbereich 41 aufweisen. Die breiten Öffnungsbereiche 41 sind jeweils an den Endbereichen der Verriegelungsleisten 37 angeordnet und die schmalen Öffnungsbereiche 40 schließen sich an die breiten Öffnungsbereiche 41 in Richtung zur Längsmitte der Verriegelungsleisten 37 an. Im Bereich der schmalen Öffnungsbereiche 40 ist jeweils eine flache Niete 42 vorgesehen, so dass die Verriegelungsleisten 37 in Längsrichtung verschieblich an der Aufspannplatte 16 fixiert sind.

Die breiten Öffnungsbereiche 41 weisen jeweils zwei seitlich nach innen vorstehende Zungen 43 auf. Die Zungen 43 erstrecken sich etwa über die halbe Längserstreckung der breiten Öffnungsbereiche 41 und sind an dem zum übrigen breiten Öffnungsbereich 41 weisenden Ende etwas verjüngt, so dass sie jeweils einen Keil bilden.

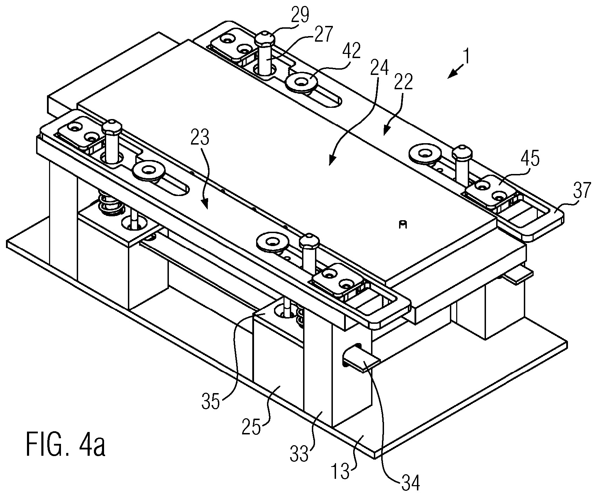

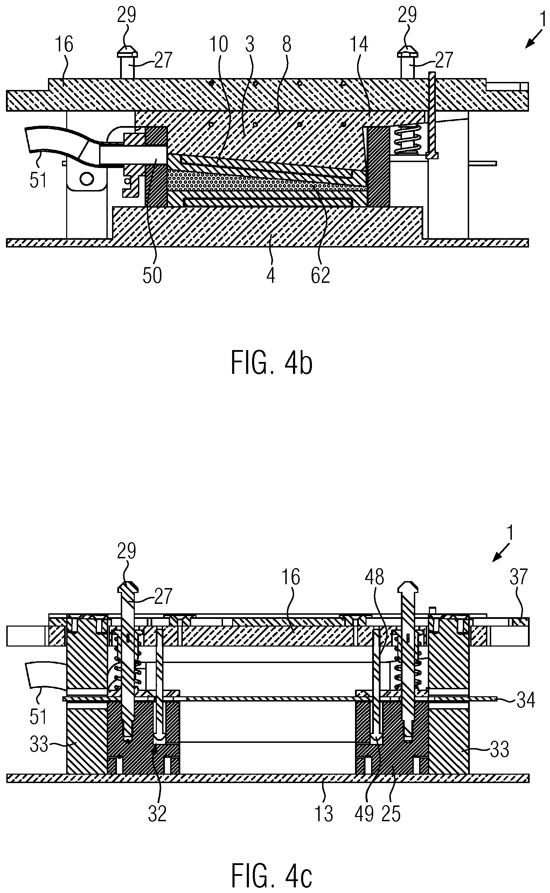

Die freien Enden der Abstandssäulen 33 weisen jeweils einen in Längsrichtung der Randbereiche 22, 23 verlaufenden Steg 44 auf, auf welchen ein beidseitig vorstehendes Plättchen 45 befestigt ist, so dass in Längsrichtung der Randbereiche 22, 23 jeweils zwei Nuten 46 ausgebildet sind. Die Größe des Plättchens 45 ist in der Draufsicht geringfügig kleiner als der breite Öffnungsbereich 41 ohne Zungen 43. Hierdurch kann das freie Ende der Abstandssäulen 33 durch die Durchgangsöffnungen 39 hindurchgeführt werden. Durch Verschieben der Verriegelungsleisten 37 werden die Zungen 43 in die Nuten 46 eingebracht und die Aufspannplatte 16 mit den Abstandssäulen 33 und damit mit der weiteren Aufspannplatte 13 in der geschlossenen Stellung des Crackspalt-Formwe4rkzeuges 1 fest verbunden **(****Figur 4a-****4c).**

Die obere Aufspannplatte 16 weist an den Randbereichen 22, 23 insgesamt vier Durchgangsöffnungen 47 auf, wobei eine jede Durchgangsöffnung einem Federstiftkopf 29 der unteren Aufspannplatte 13 gegenüberliegend angeordnet ist, so dass beim Zusammendrücken der beiden Aufspannplatten 13, 16 die Federstiftköpfe 29 durch die Durchgangsöffnungen 47 hindurchtreten, wobei die Federstiftbuchsen an der Unterseite der oberen Aufspannplatte 16 anschlagen und die Schraubenfeder 28 ein Stück zusammengedrückt werden. Die vier Durchgangsöffnungen 47 sind somit im selben Raster wie die vier Federstifte 27 angeordnet. Die Durchgangsöffnungen 47 der oberen Aufspannplatte 16 befinden sich im Bereich der Durchgangsöffnungen 39 der Verriegelungsleisten 37, so dass die Federstiftköpfe 29 nicht mit den Verriegelungsleisten 37 kollidieren.

An der zum Formraum 6 weisenden Seite der Aufspannplatte 16 sind senkrecht abstehende Führungsstifte 48 im Raster der Führungsbohrungen 32 angeordnet. Die Führungsstifte 48 weisen an ihrem freien Ende jeweils einen Führungsstiftkopf 49 auf. Die Führungsstiftköpfe 49 sind konisch ausgebildet, so dass sie Einführschrägen bilden. Der Führungsstiftkopf 49 ist so bemessen, dass er mit etwas Spiel in jeweils eine Führungsbohrung 32 passt. Die Führungsstiftköpfe 49 sind jedoch so groß, dass sie vom schmalen Bereich der Verriegelungsdurchgangsöffnungen 36 der Verriegelungsleisten 34 zurückgehalten werden, so dass die in die Führungsbohrungen 32 eingebrachten Führungsstiftköpfe 49 durch Verschieben der Verriegelungsleisten 34 in den Führungsbohrungen 32 verriegelt werden können. Die Führungsstifte 48 bilden somit zusammen mit den Führungsbohrungen 32 und den Verriegelungsleisten 34 eine Verliersicherung, welche ein Trennen der beiden Aufspannplatten 13, 16 bzw. der beiden Formhälften 2, 3 verhindert.

An der Seitenwandung 5 der Matrizen-Formhälfte 2 ist eine Einfüllöffnung 50 ausgebildet, an welcher ein Einfüllschlauch 51 angeschlossen ist, der zu einem Vorratsbehälter 53 führt, von dem Schaumstoffpartikel abgezogen und dem Formraum 6 zugeführt werden können. Da in geschlossenem Zustand des Crackspalt-Formwerkzeuges 1 die Einfüllöffnung 50 der Matrizen-Formhälfte 2 von der Stempel-Formhälfte 3 **(****Figur 4b****)** abgedeckt wird, ist es nicht notwendig, einen speziellen Verschlussmechanismus an der Einfüllöffnung 50 vorzusehen. Es kann jedoch zweckmäßig sein, den Einfüllschlauch 51 lösbar auszubilden, und beim geschlossenen Crackspalt-Formwerkzeug 1 einen Stöpsel aus einem dielektrischen Material einzusetzen, das eine ähnliche Dielektrizitätskonstante wie das Material der Seitenwandung 5 besitzt. Hierdurch können Inhomogenitäten in elektrischen Feldern im Bereich der Einfüllöffnung 50 vermieden werden. Im vorliegenden Ausführungsbeispiel weist die Matrizen-Formhälfte 2 keine Entlüftungsöffnung auf. Sollten die beiden Formhälften 2, 3 dicht miteinander abschließen, dann kann eine Entlüftungsöffnung notwendig sein. Bei Vorsehen einer Entlüftungsöffnung kann es auch sinnvoll sein, im geschlossenem Zustand des Crackspalt-Formwerkzeuges 1 einen Stöpsel aus einem dielektrischen Material mit einer ähnlichen Dielektrizitätskonstante wie das Material der Seitenwandung 5 einzusetzen.

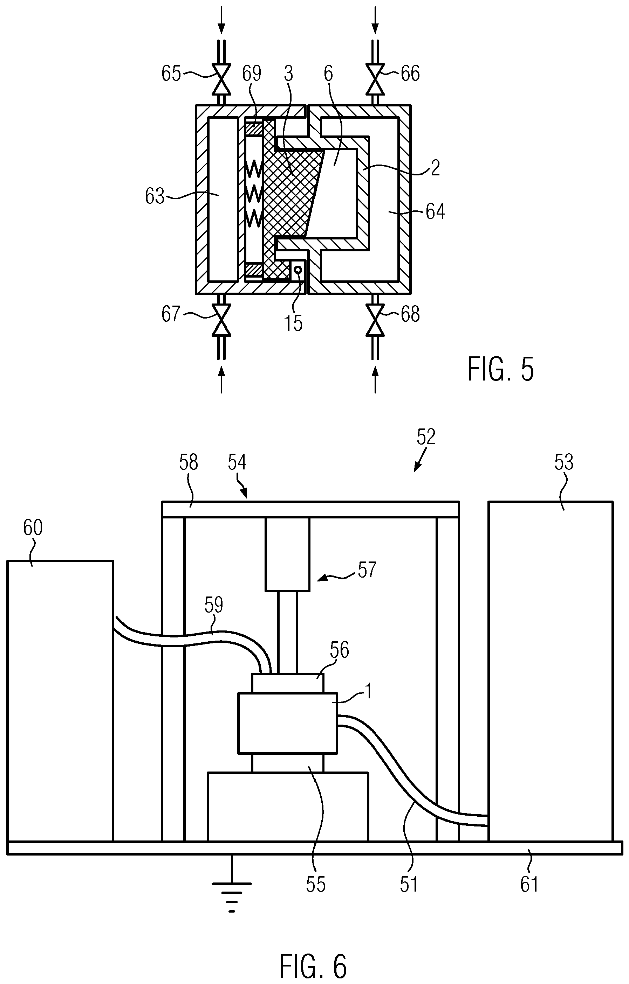

Dieses Crackspalt-Formwerkzeug 1 kann in einer Vorrichtung 52 zum Erzeugen von Partikelschaumstoffteilen eingesetzt werden **(****Figur 6****).** Eine solche Vorrichtung weist einen Vorratsbehälter 53 auf, der mit dem Einfüllschlauch 51 mit dem Crackspalt-Formwerkzeug 1 verbunden ist. Das Crackspalt-Formwerkzeug 1 wird in einer Presse 54 angeordnet, welche einen Pressentisch 55, einen Press-Stempel 56, eine Zylinder-Kolbeneinheit 57 zum Bewegen des Press-Stempels 56 und einen stabilen Rahmen 58 aufweist, an welchem die Zylinder-Kolbeneinheit 57 und der Pressentisch 55 befestigt sind. Der Press-Stempel 56 ist aus einer elektrisch-leitenden Metallplatte ausgebildet. Der Press-Stempel 56 ist über eine Wellenleitung 59, z.B. in Form eines Koaxialkabels, mit einem RF-Generator 60 verbunden. Der Pressentisch 55 weist eine elektrisch-leitende Tischplatte aus Metall auf, welche über eine elektrisch-leitende Grundplatte 61 mit Masse verbunden ist.

Nachfolgend wird die Verwendung des Crackspalt-Formwerkzeuges 1 zum Herstellen eines Partikelschaumstoffteils in der Vorrichtung 52 erläutert.

Das Crackspalt-Formwerkzeug 1 befindet sich zunächst in einer Crackspalt-Stellung, bei welcher die Führungsstifte 48 in den Führungsbohrungen 32 mittels der Verriegelungsleisten 34 verriegelt sind **(****Figur 3a-3b****)** und die Aufspannplatten 13, 16 mittels der Schraubenfedern 28 auf den maximalen Abstand gehalten werden, der durch die Führungsstifte 48 zugelassen wird. Hierbei ist die Stempel-Formhälfte 3 so weit in die Matrizen-Formhälfte 2 eingesetzt, dass der Formraum 6 im Wesentlichen geschlossen ist. Die Stempel-Formhälfte 3 ist gegenüber der oberen Aufspannplatte 16 um den maximal möglichen Schwenkwinkel ausgelenkt angeordnet. In dieser Crackspalt-Stellung wird das Crackspalt-Formwerkzeug 1 in die Presse 54 eingesetzt. Der Einfüllschlauch 51 wird an die Einfüllöffnung 50 des Crackspalt-Formwerkzeuges 1 angeschlossen.

Aus dem Vorratsbehälter 53 werden Schaumstoffpartikel dem Formraum 6 zugeführt. Ist der Formraum 6 vollständig mit Schaumstoffpartikel gefüllt, dann wird die Zylinder-/Kolbeneinheit 57 betätigt, um die beiden Aufspannplatten 13, 16 und damit die beiden Formhälften 2, 3 zusammenzudrücken. Das Crackspalt-Formwerkzeug wird so in die geschlossene Stellung gebracht **(****Fig. 4a-4c****).** Hierdurch werden die im Formraum 6 befindlichen Schaumstoffpartikel komprimiert und durch den hierdurch erzeugten Druck die Stempel-Formhälfte 3 um die Schwenkachse 15 zur oberen Aufspannplatte 16 geschwenkt. Dies hat zur Folge, dass der Verschiebeweg der Stempel-Formhälfte 3 in dem von der Schwenkachse 15 stärker beabstandeten Bereich geringer als in dem zur Schwenkachse 15 benachbarten Bereich ist. Im vorliegenden Ausführungsbeispiel ist der Formraum 6 etwa keilförmig ausgebildet, wobei der zur Schwenkachse benachbarte Bereich dicker als der von der Schwenkachse entfernte Bereich ist. Durch das Schwenken der Stempel-Formhälfte 3 wird eine gleichmäßige Verdichtung der Schaumstoffpartikel über den gesamten keilförmigen Körper des Partikelschaumstoffteils erzielt.

Beim Zusammendrücken der beiden Formhälften 2, 3 wird von der Stempel-Formhälfte 3 die Einfüllöffnung 50 der Matrizen-Formhälfte 2 abgedeckt und damit verschlossen. Danach kann der Einfüllschlauch 51 vom Crackspalt-Formwerkzeug 1 abgezogen werden. Es kann dann ein Stöpsel in die Einfüllöffnung 50 eingesteckt werden, der eine ähnliche Dielektrizitätskonstante wie die Seitenwandung 5 aufweist.

Im zusammengedrückten bzw. geschlossenen Zustand des Crackspalt-Formwerkzeuges 1 wird mit dem RF-Generator 60 ein elektromagnetisches Hochfrequenzfeld erzeugt, das über den Wellenleiter 59, den Press-Stempel 56 an die Stempel-Formhälfte 3 angelegt wird. Die Matrizen-Formhälfte 2 ist über den Pressentisch 55 mit Masse verbunden. Die Grundkörper 7, 8 der Formhälften 2, 3 sind voneinander elektrisch isoliert, so dass sie wie ein Plattenkondensator wirken, der den Formraum 6 umgibt. Durch das so erzeugte elektromagnetische Feld werden die Schaumstoffpartikel erhitzt und miteinander zu einem Partikelschaumstoffteil 62 verschweißt **(****Fig. 4b****).**

Im geschlossenen Zustand des Crackspalt-Formwerkzeuges 1 vor oder nach dem Verschweißen kann das Crackspalt-Formwerkzeug 1 mittels der Verriegelungsleiste 37 derart verriegelt werden, so dass die Zungen 43 in die Nuten 46 der Abstandssäulen 33 eingreifen. Hiermit ist das Crackspalt-Formwerkzeug im geschlossenen Zustand verriegelt. Die Presse 54 kann geöffnet werden und das Crackspalt-Formwerkzeug 1 wird im geschlossenen Zustand entnommen. Es kann dann mittels einer geeigneten Kühleinrichtung, wie zum Beispiel einem Gebläse, gekühlt werden. Während das Crackspalt-Formwerkzeug 1, in dem bereits ein Partikelschaumstoffteil ausgeformt ist, gekühlt wird, kann ein weiteres Crackspalt-Formwerkzeug 1 in die Presse 54 eingesetzt werden.

Ist das Partikelschaumstoffteil 62 ausreichend gekühlt, dann wird durch Verschieben der Verriegelungsleiste 37 die Verbindung zwischen den beiden Formhälften 2, 3 gelöst und das Partikelschaumstoffteil 62 kann entsprechend entformt werden.

Crackspalt-Werkzeuge für Vorrichtungen zum Herstellen von Partikelschaumstoffteilen, welche die Schaumstoffpartikel mittels Dampf verschweißen, sind seit langem bekannt. Der oben erläuterte Schwenkmechanismus kann gleichermaßen auf ein solches Crackspalt-Formwerkzeug 1 übertragen werden **(****Fig. 5****)**. Hierbei sind jedoch nicht die in den Randbereichen 22, 23 angeordneten Mittel zum Koppeln der beiden Aufspannplatten 13, 16 notwendig, da die entsprechenden Aufspannplatten in einer solchen Vorrichtung an den Presselementen (Press-Stempel bzw. Pressentisch) fixiert werden und das gesamte Herstellungsverfahren bis zum Abkühlen und Entformen des Partikelschaumstoffteils innerhalb der Presse ausgeführt wird. Es sind jedoch Dampfkammern 63, 64 vorzusehen, die über Ventile 65, 66 mit Dampf versorgt bzw. von welchen mit Ventilen 67, 68 Dampf abgezogen wird. Die Dampfkammer 64 ist integral mit der Formhälfte 23 ausgebildet. Die Formhälfte 2 bildet eine Matrizen-Formhälfte und die Formhälfte 3 eine Stempel-Formhälfte, welche mittels eines Schwenkgelenkes mit der Dampfkammer 63 verbunden ist. Die Formhälfte 3 ist somit um eine Schwenkachse 15 schwenkbar gelagert. Zwischen der Formhälfte 3 und der Dampfkammer 63 sind Federelemente 21 angeordnet, die diese beiden Elemente auseinander drücken.

Die beiden Formhälften 2, 3 begrenzen einen Formraum 6. Die an den Formraum 6 angrenzenden Wandungen der Dampfkammern 63 und 64 und die Formhälfte 3 sind dampfdurchlässig ausgebildet. Sie sind vorzugsweise perforiert und/oder aus einem porösen Material ausgebildet. Zwischen der Formhälfte 3 und der Dampfkammer 63 ist eine umlaufende Dichtung 69 vorgesehen, so dass zwischen der Dampfkammer 63 und dem Formraum 6 Dampf kontrolliert ausgetauscht werden kann.

Bei den oben erläuterten Ausführungsbeispielen ist an der Seitenwandung der Matrizen-Formhälfte 2 eine Einfüllöffnung 50 ausgebildet, an welcher ein Einfüllschlauch 51 anschließbar ist. Wird dieser Einfüllschlauch 51 abgezogen, dann kann die Einfüllöffnung 50 mittels eines Stöpsels aus einem dielektrischen Material verschlossen werden.

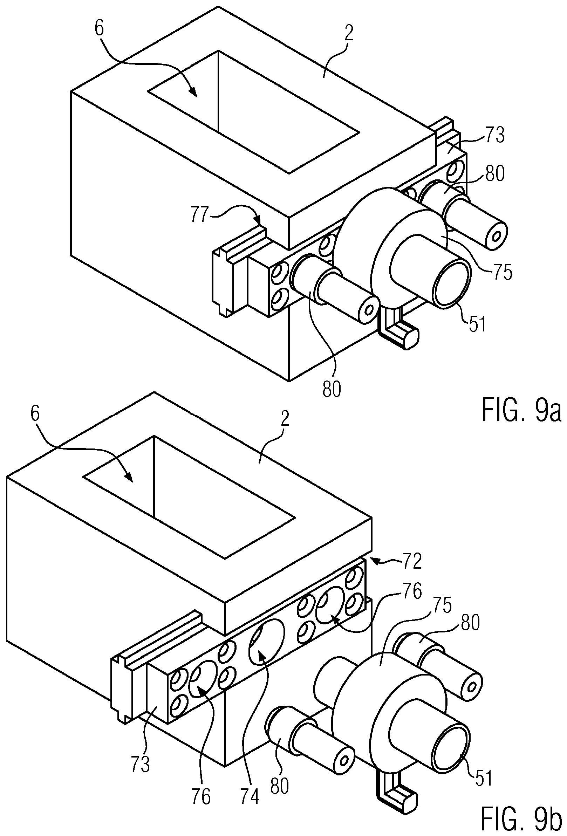

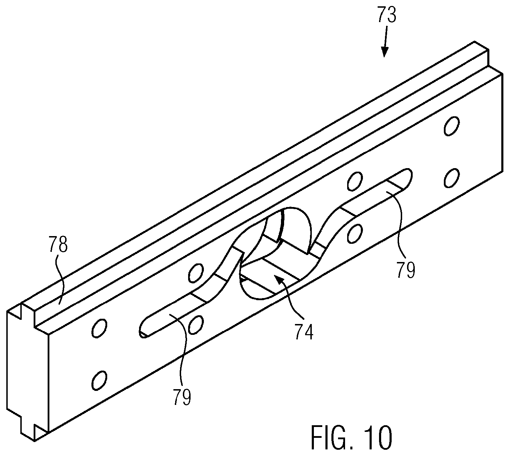

Die **Figuren 9a bis 10** zeigen eine alternative Ausführungsform für einen Verschluss der Einfüllöffnung einer Matrizen-Formhälfte 2.Die Matrizen-Formhälfte 2 ist im Bereich der Einfüllöffnung mit einer Ausnehmung 72 versehen, welche langgestreckt ist und eine gleichbleibende Querschnittskontur in Längsrichtung aufweist, sodass ein Schieber 73 darin verschieblich aufgenommen werden kann. Der Schieber weist eine Einfüllöffnung 74 auf, an welche der Einfüllschlauch 51 mit einem entsprechenden Mundstück 75 anschließbar ist. Weiterhin weist der Schieber 73 zumindest einen Blasluftanschluss 76 auf. Im vorliegenden Ausführungsbeispiel ist der Schieber 73 mit zwei Blasluftanschlüssen 76 versehen, wobei jeweils einer der Blasluftanschlüsse 76 in Längsrichtung des Schiebers 73 an beiden Seiten neben der Einfüllöffnung 74 angeordnet ist.

Der Schieber 73 weist im Querschnitt ein Profil auf, das formschlüssig in der Ausnehmung 72 lagert. Im vorliegenden Ausführungsbeispiel ist die Ausnehmung 72 mit zwei Nuten 77 versehen, in welche jeweils eine korrespondierende Federleiste 78 des Schiebers 73 eingreift. An der zum Formraum 6 weisende Seite des Schiebers 73 sind von den Blasluftanschlüssen 76 jeweils zur Einfüllöffnung 74 sich erstreckende Kanäle 79 ausgebildet, welche an der Einfüllöffnung 74 tangential münden.

Wird an den Blasluftanschlüssen 76 Luft eingeblasen, dann tritt diese tangential im Bereich der Einfüllöffnung 74 ein und erzeugt einen Wirbel, welcher darin befindliche Schaumstoffpartikel aufwirbelt.

Hierdurch wird nach dem Befüllen des Formraums 6 die Einfüllöffnung der Matrizen-Formhälfte 2 und die Einfüllöffnung 74 des Schiebers 73 freigeblasen, sodass der Schieber frei verschieblich ist.

Der Schieber kann zwischen einer Stellung, in welcher die Einfüllöffnung 74 des Schiebers 73 mit der Einfüllöffnung der Matrizen-Formhälfte 2 mündet **(****Figur 9b****)** und einer Stellung, in welche die Einfüllöffnung 74 des Schiebers 73 versetzt zur Einfüllöffnung der Matrizen-Formhälfte 2 **(****Figur 9a****)** angeordnet ist, bewegt werden. Bei der versetzten Anordnung ist die Einfüllöffnung der Matrizen-Formhälfte 2 vom Schieber 73 verdeckt. Jedoch ist sie verschlossen.

Der Schieber 73 ist vorzugsweise aus einem Material mit der gleichen Permittivität und/oder mit dem gleichen dielektrischen Verlustfaktor wie der übrige Körper der Matrizen-Formhälfte 2 ausgebildet. Hierdurch wird sichergestellt, dass der Schieber in der Schließstellung gemäß **Figur 9a** das elektrische Feld im Formraum 6 nicht verändert, da die Einfüllöffnung der Matrizen-Formhälfte 2 aufgrund des Schiebers mit einem Material mit ähnlichen dielektrischen Eigenschaften wie das übliche Material des Körpers der Matrizen-Formhälfte 2 verschlossen ist.

Das Mundstück 75 und die entsprechenden Mundstücke 80 zum Anschließen einer Druckluftleitung an jeweils einen der Blasluftanschlüsse 76 können von einem Roboter automatisch gehandhabt werden, sodass die Mundstücke 75, 80 automatisch in den Schieber 73 eingesteckt bzw. abgezogen werden. Der Schieber 73 kann mittels des Roboters zwischen den beiden Stellungen gemäß **Figur 9a** und **Figur 9b** hin- und hergeschoben werden. Hierdurch lässt sich das Formwerkzeug einfach in einen automatischen Prozess integrieren.

Wie es oben erläutert ist, kann mit dem erfindungsgemäßen Werkzeug ein Partikelschaumstoffteil erzeugt werden, das einen im Wesentlichen keilförmigen Körper aufweist. Keilförmig bedeutet, dass der Körper an einem Ende dicker als am anderen Ende ist, wobei die Dicke vom dicken zum dünnen Ende allmählich abnimmt. Selbstverständlich können die Oberflächen des keilförmigen Körpers konturiert sein und müssen nicht exakt ebenflächig ausgebildet sein. Die Besonderheit eines solchen keilförmigen Körpers aus einem Partikelschaumstoffteil liegt darin, dass dieser Körper im Wesentlichen im gesamten Bereich eine etwa konstante Dichte an Schaumstoffpartikel aufweist. Mit herkömmlichem Formwerkzeug hergestellte keilförmige Partikelschaumstoffteile besitzen in der Regel eine wesentlich geringere Dichte an Schaumstoffpartikel in ihren dickeren Bereichen als ihren dünneren Bereichen. Dies kann jedoch nachteilig sein, insbesondere wenn als Schaumstoffpartikel ein elastisches Material, wie z. B. eTPU, verwendet wird, da dann herkömmlich hergestellte keilförmige Körper aus Schaumstoffpartikel im dicken Bereich sehr weich sind, wohingegen sie im dünnen Bereich sehr fest sind. Durch das Ausbilden der keilförmigen Körper mit gleichmäßiger Dichte an Schaumstoffpartikel wird eine in etwa gleichmäßige Festigkeit des Körpers über sein gesamtes Volumen erzielt.

Die Erfindung kann folgendermaßen kurz zusammengefasst werden:
Die vorliegende Erfindung betrifft ein Crackspalt-Formwerkzeug zum Herstellen eines Partikelschaumstoffteils mit zwei Formhälften. Die Formhälften sind derart zueinander schwenkbar angeordnet, dass sie beim Füllen mit Schaumstoffpartikeln bereichsweise unterschiedlich weit voneinander beabstandet sind und beim Zusammendrücken in eine geschlossene Stellung aufgrund der Schwenkbewegung unterschiedlich weit zusammengefahren werden. Hierdurch lassen sich Bereiche des Formraumes mit unterschiedlicher Dicke gleichmäßig verdichten bzw. mit gleicher Dicke unterschiedlich verdichten.

### Bezugszeichenliste

- 1: Crackspalt-Formwerkzeug
- 2: Formhälfte
- 3: Formhälfte
- 4: Bodenwandung
- 5: Seitenwandung
- 6: Formraum
- 7: Grundkörper
- 8: Grundkörper
- 9: Formkörper
- 10: Formkörper
- 11: innere Schicht
- 12: äußere Schicht
- 13: Aufspannplatte
- 14: Schwenkplatte
- 15: Schwenkachse
- 16: Aufspannplatte
- 17: Schwenkhebel
- 18: Schwenkhebel
- 19: Schraubbolzen
- 20: Bolzenkopf
- 21: Federelement
- 22: Randbereich
- 23: Randbereich
- 24: zentrale Außenfläche
- 25: Sockel
- 26: Gewindebohrung
- 27: Federstift
- 28: Schraubenfeder
- 29: Federstiftkopf
- 30: Federstiftbuchse
- 31: Kragen
- 32: Führungsbohrung
- 33: Abstandssäule
- 34: Verriegelungsleiste
- 35: Abdeckung
- 36: Verriegelungsdurchgangsöffnung

- 37: Verriegelungsleiste
- 38: Durchgangsöffnung
- 39: Durchgangsöffnung
- 40: schmaler Öffnungsbereich
- 41: breiter Öffnungsbereich
- 42: Niete
- 43: Zunge
- 44: Steg
- 45: Plättchen
- 46: Nut
- 47: Durchgangsöffnung
- 48: Führungsstift
- 49: Führungsstiftkopf
- 50: Einfüllöffnung
- 51: Einfüllschlauch
- 52: Herstellungsvorrichtung
- 53: Vorratsbehälter
- 54: Presse
- 55: Pressentisch
- 56: Pressen-Stempel
- 57: Zylinder-/Kolbeneinheit
- 58: Rahmen
- 59: Wellenleitung
- 60: RF-Generator
- 61: Grundplatte
- 62: Partikelschaumstoffteil
- 63: Dampfkammer
- 64: Dampfkammer
- 65: Ventil
- 66: Ventil
- 67: Ventil
- 68: Ventil
- 69: Dichtung
- 70: Langloch

- 72: Ausnehmung
- 73: Schieber
- 74: Einfüllöffnung
- 75: Mundstück
- 76: Blasluftanschluss
- 77: Nut
- 78: Leiste
- 79: Kanal
- 80: Mundstück
- 81: Entlüftungsöffnung
- 101: Einzelstempel
- 102: Betätigungsstempel
- 103: Betätigungsplatte
- 104: Kolbenstange
- 105: Gegenplatte
- 106: Rahmen
- 107: Federelement
- 108: Federelement
- 109: Betätigungskolben
- 110: Zylinderraum

## Patentansprüche

1. Crackspalt-Formwerkzeug (1) zum Herstellen eines Partikelschaumstoffteils umfassend zwei Formhälften (2, 3), welche zum Befüllen des Crackspalt-Formwerkzeuges (1) mit Schaumstoffpartikeln in einer Crackspaltstellung anordbar sind, bei welcher die Formhälften (2, 3) gegenüber einer geschlossenen Stellung etwas voneinander beabstandet sind, und vor dem Verschweißen mit den darin befindlichen Schaumstoffpartikeln zusammendrückbar ausgebildet sind,
**dadurch gekennzeichnet,**
**dass** die Formhälften (2, 3) derart zueinander beweglich angeordnet sind, dass sie beim Füllen mit Schaumstoffpartikeln bereichsweise unterschiedlich weit voneinander beabstandet sind, so dass beim Zusammendrücken in die geschlossene Stellung die Formhälften (2, 3) bereichsweise unterschiedlich weit zusammengefahren werden, wobei zumindest eine der beiden Formhälften (2, 3) um eine Schwenkachse (15) schwenkbar gelagert ist, so dass beim Zusammendrücken in die geschlossene Stellung diese Formhälfte eine Schwenkbewegung ausführt.

2. Crackspalt-Formwerkzeug (1) nach Anspruch 1,
**dadurch gekennzeichnet,**
**dass** die Schwenkachse (15) exzentrisch angeordnet ist.

3. Crackspalt-Formwerkzeug (1) nach Anspruch 1 oder 2,
**dadurch gekennzeichnet,**
**dass** ein Schwenkelement (14) vorgesehen ist, an welchem die schwenkbar gelagerte Formhälfte (2, 3) angeordnet ist und welches um einen vorbestimmten Schwenkbereich um die Schwenkachse (15) schwenkbar ist, wobei ein Schwenkbereichsbegrenzungselement (19) zur Begrenzung des Schwenkbereiches vorgesehen ist, das vorzugsweise einstellbar ausgebildet ist.

4. Crackspalt-Formwerkzeug (1) nach einem der Ansprüche 1 bis 3,
**dadurch gekennzeichnet, dass** eine jede der beiden Formhälften (2, 3) jeweils auf einer Aufspannplatte (13, 16) angeordnet ist, wobei zumindest ein Teil einer der beiden Formhälften (2, 3) beweglich gegenüber der entsprechenden Aufspannplatte (13, 16) angeordnet ist.

5. Crackspalt-Formwerkzeug (1) nach Anspruch 4,
**dadurch gekennzeichnet,**
**dass** zwischen den Aufspannplatten (13, 16) federbeaufschlagte Abstandselemente (27, 28, 30) vorgesehen sind, mit welchen die Aufspannplatten (13, 16) mittels der Federwirkung der Abstandselemente (27, 28, 30) derart auf Abstand gehalten werden können, dass sich die beiden Formhälften (2, 3) in der Crackspaltstellung befinden, wobei vorzugsweise eine der beiden Formhälften (2, 3) mittels eines Schwenkgelenks mit der entsprechenden Aufspannplatte (13, 16) verbunden ist.

6. Crackspalt-Formwerkzeug (1) nach Anspruch 5,
**dadurch gekennzeichnet,**
**dass** die gegenüber der entsprechenden Aufspannplatte (13, 16) bewegliche Formhälfte (2, 3) entweder innerhalb eines vorbestimmten Bewegungsbereiches frei beweglich angeordnet ist und die obere Formhälfte ist, so dass sie aufgrund der Gewichtskraft in der Crackspaltstellung bzgl. der Aufspannplatte (13, 16) einen maximalen Abstand einnimmt und/oder ein Federelement (21) zwischen der beweglichen Formhälfte und der entsprechenden Aufspannplatte (13, 16) angeordnet ist, welches die Formhälfte weg von der Aufspannplatte (13, 16) drückt.

7. Crackspalt-Formwerkzeug (1) nach einem der Ansprüche 4 bis 6,
**dadurch gekennzeichnet,**
**dass** zumindest an einer der beiden Aufspannplatten (13, 16) ein oder mehrere Führungsstifte (48) angeordnet sind, welche jeweils in eine an der anderen Aufspannplatte (13, 16) ausgebildeten Führungsbohrung (32) eingreifen können, wobei eine Verliersicherung zum Verhindern des vollständigen Trennens zwischen dem Führungsstift (48) und der entsprechenden Führungsbohrung (32) vorgesehen ist.

8. Crackspalt-Formwerkzeug (1) zum Herstellen eines Partikelschaumstoffteils nach einem der Ansprüche 1 bis 7, umfassend
**dadurch gekennzeichnet,**
**dass** eine der beiden Formhälften (2, 3) einen Abschnitt mit einer Durchgangsöffnung (50) aufweist, der in der Crackspaltstellung einen zwischen den beiden Formhälften (2, 3) ausgebildeten Hohlraum begrenzt und in der geschlossenen Stellung des Crackspalt-Formwerkzeuges (1) außen an der anderen Formhälfte (2, 3) anliegt, so dass die Durchgangsöffnung (50) in der Crackspaltstellung einen freien Durchgang in den Hohlraum bildet und in der geschlossenen Stellung verschlossen ist.

9. Crackspalt-Formwerkzeug (1) nach Anspruch 8,
**dadurch gekennzeichnet,**
**dass** ein Stöpsel zum Verschließen der Durchgangsöffnung (50) vorgesehen ist, der im Wesentlichen die gleiche dielektrische Konstante wie das die Durchgangsöffnung (50) begrenzende Material aufweist, und/oder
**dass** die Durchgangsöffnung (50) zum Zuführen von Schaumstoffpartikeln und/oder zum Entweichen von Luft ausgebildet ist.

10. Crackspalt-Formwerkzeug (1) zum Herstellen eines Partikelschaumstoffteilsnach einem der Ansprüche 1 bis 9,
**dadurch gekennzeichnet,**
**dass** eine der beiden Formhälften (2, 3) einen Abschnitt mit einer Durchgangsöffnung (50) aufweist, welcher mit einem Schieber (73) verschließbar ist, wobei der Schieber aus einem Material mit ähnlicher Permittivität und/oder mit ähnlichem dielektrischen Verlustfaktor ausgebildet ist, wie das benachbart angeordnete Material der entsprechenden Formhälfte (2, 3).

11. Crackspalt-Formwerkzeug (1) nach Anspruch 10,
**dadurch gekennzeichnet,**
**dass** der Schieber (73) eine Einfüllöffnung (74) aufweist, in welche ein Kanal (79) tangential zum Zuführen von einem Luftstrom mündet, um einen Luftwirbel zu erzeugen.

12. Vorrichtung zum Herstellen eines Partikelschaumstoffteils umfassend
- ein Crackspalt-Formwerkzeug (1) nach einem der Ansprüche 1 bis 11,
- eine Fördereinrichtung zum Zuführen von Schaumstoffpartikeln zum Crackspalt-Formwerkzeug (1), und
- eine Heizeinrichtung zum Erhitzen der Schaumstoffpartikel im Crackspalt-Formwerkzeug (1), so dass diese miteinander verschweißen.

13. Vorrichtung nach Anspruch 12,
**dadurch gekennzeichnet,**
**dass** die Heizeinrichtung eine Strahlungsquelle (60) für elektromagnetische Strahlung, insbesondere RF-Strahlung, ist, oder
**dass** die Heizeinrichtung eine Einrichtung (63-68) zum Erzeugen und Zuführen von Dampf, insbesondere gesättigtem Trockendampf, zum Crackspalt-Formwerkzeug (1) ist.

14. Verfahren zum Herstellen eines Partikelschaumstoffteils **dadurch gekennzeichnet,**
**dass** das Partikelschaumstoffteil unter Verwendung eines Crackspalt-Formwerkzeuges (1) nach einem der Ansprüche 1 bis 11 oder einer Vorrichtung nach Anspruch 12 oder 13 hergestellt wird, wobei
das Partikelschaumstoffteil eine keilförmigen Form aufweist,
wobei die Schaumstoffpartikel im gesamten Partikelschaumstoffteil mit gleichmäßiger Dichte angeordnet sind, und wobei die Schaumstoffpartikel vorzugsweise aus einem elastischen Material, wie z. B. eTPU, ausgebildet sind.

## Claims

1. A crack split molding tool (1) for producing a foam particle component, comprising two mold halves (2, 3) which can be arranged in a crack split position for filling the crack split molding tool (1) with foam particles, in which position the mold halves (2, 3) are slightly spaced apart from each other relative to a closed position, and are designed to be pressed against each other before welding with the foam particles located therein,
**characterized in that**
the mold halves (2, 3) are arranged so as to be movable relative to each other in such a way that, when filling them with foam particles, they are spaced apart from each other by different distances in some areas, so that when pressed together into the closed position, the mold halves (2, 3) are brought together to different extents in some areas, wherein at least one of the two mold halves (2, 3) is mounted so as to be pivotable about a pivot axis (15), so that when pressed together into the closed position, this mold half performs a pivoting movement.

2. The crack split molding tool (1) according to claim 1,
**characterized in that**
the pivot axis (15) is arranged so as to be off-center.

3. The crack split molding tool (1) according to claim 1 or 2,
**characterized in that**
a pivot element (14) is provided, on which the pivotably mounted mold half (2, 3) is arranged and which can pivot by a predetermined pivot range about the pivot axis (15), a pivot range limiting element (19) being provided to limit the pivot range, the pivot range limiting element being preferably designed so as to be adjustable.

4. The crack split molding tool (1) according to any one of claims 1 to 3,
**characterized in that**
each of the two mold halves (2, 3) is arranged on a clamping plate (13, 16), wherein at least a part of one of the two mold halves (2, 3) is arranged so as to be movable relative to the corresponding clamping plate (13, 16).

5. The crack split molding tool (1) according to claim 4,
**characterized in that**
spring-loaded spacer elements (27, 28, 30) are provided between the clamping plates (13, 16), by means of which the clamping plates (13, 16) can be held at a distance by the spring action of the spacer elements (27, 28, 30) in such a way that the two mold halves (2, 3) are in the crack split position, preferably one of the two mold halves (2, 3) being connected to the corresponding clamping plate (13, 16) by means of a pivot joint.

6. The crack split molding tool (1) according to claim 5,
**characterized in that**
the mold half (2, 3) movable relative to the corresponding clamping plate (13, 16) is either arranged so as to be freely movable within a predetermined range of movement and is the upper mold half, so that, due to weight force, it assumes a maximum distance in the crack split position with respect to the clamping plate (13, 16), and/or a spring element (21) is arranged between the movable mold half and the corresponding clamping plate (13, 16), which pushes the mold half away from the clamping plate (13, 16).

7. The crack split molding tool (1) according to any one of claims 4 to 6,
**characterized in that**
at least one or more guide pins (48) are arranged on at least one of the two clamping plates (13, 16), which can each engage in a guide bore (32) formed on the other clamping plate (13, 16), wherein a loss prevention device is provided to prevent complete separation between the guide pin (48) and the corresponding guide bore (32).

8. The crack split molding tool (1) for producing a foam particle component according to any one of claims 1 to 7, comprising
**characterized in that**
one of the two mold halves (2, 3) comprises a portion with a through-opening (50), said portion in the crack split position delimiting a cavity formed between the two mold halves (2, 3) and in the closed position of the crack split molding tool (1) resting against the outside of the other mold half (2, 3), so that the through-opening (50) in the crack split position forms a free passage into the cavity and is closed in the closed position.

9. The crack split molding tool (1) according to claim 8,
**characterized in that**
a plug is provided for closing the through-opening (50), which has essentially the same dielectric constant as the material delimiting the through-opening (50), and/or
the through-opening (50) is designed for supplying foam particles and/or for escaping air.

10. The crack split molding tool (1) for producing a foam particle component according to any one of claims 1 to 9,
**characterized in that**
one of the two mold halves (2, 3) comprises a portion which has a through-opening (50) and can be closed with a slide (73), wherein the slide is made of a material with similar permittivity and/or with a similar dielectric loss factor as the adjacent material of the corresponding mold half (2, 3).

11. The crack split molding tool (1) according to claim 10,
**characterized in that**
the slide (73) has a filling opening (74) into which a channel (79) opens tangentially for supplying an air flow in order to generate an air vortex.

12. A device for producing a foam particle component, comprising
- a crack split molding tool (1) according to any one of claims 1 to 11,
- a conveyor device for feeding foam particles to the crack split molding tool (1), and
- a heating device for heating the foam particles in the crack split molding tool (1) so that they fuse to one another.

13. The device according to claim 12,
**characterized in that**
the heating device is a radiation source (60) for electromagnetic radiation, in particular RF radiation, or
the heating device is a device (63-68) for generating and supplying steam, in particular saturated dry steam, to the crack split molding tool (1).

14. A method for producing a foam particle component,
**characterized in that**
the foam particle component is produced using a crack split molding tool (1) according to any one of claims 1 to 11 or a device according to claim 12 or 13, wherein
the foam particle component has a wedge-shaped form,
the foam particles are arranged throughout the foam particle component with uniform density, and the foam particles are preferably formed from an elastic material such as eTPU.

## Revendications

1. Moule d'injection-compression (1) destiné à la fabrication d'un composant en particules de mousse, comprenant deux demi-moules (2, 3) qui peuvent être disposés dans une position d'injection-compression pour remplir le moule d'injection-compression (1) avec des particules de mousse, dans laquelle position les demi-moules (2, 3) sont légèrement espacés l'un de l'autre par rapport à une position fermée, et sont conçus pour être pressés l'un contre l'autre avant soudage avec les particules de mousse qui s'y trouvent,
**caractérisé en ce que**
les demi-moules (2, 3) sont disposés de manière à pouvoir être déplacés l'un par rapport à l'autre de telle sorte que, lorsqu'ils sont remplis de particules de mousse, ils sont espacés l'un de l'autre de différentes distances dans certaines zones, de sorte que, lorsqu'ils sont pressés l'un contre l'autre en position fermée, les demi-moules (2, 3) sont rapprochés à différentes étendues dans certaines zones, sachant qu'au moins l'un des deux demi-moules (2, 3) est monté de manière à pouvoir pivoter autour d'un axe de pivotement (15), de sorte que lorsqu'ils sont pressés l'un contre l'autre en position fermée, ce demi-moule exécute un mouvement de pivotement.

2. Le moule d'injection-compression (1) selon la revendication 1,
**caractérisé en ce que**
l'axe de pivotement (15) est disposé de manière excentrée.

3. Le moule d'injection-compression (1) selon la revendication 1 ou 2,
**caractérisé en ce que**
un élément pivotant (14) est prévu, sur lequel est disposée le demi-moule (2, 3) monté de manière pivotante et qui peut pivoter dans une plage de pivotement prédéterminée autour de l'axe de pivotement (15), un élément de limitation de la plage de pivotement (19) étant prévu pour limiter la plage de pivotement, l'élément de limitation de la plage de pivotement étant de préférence conçu de manière à être réglable.

4. Le moule pour injection-compression (1) selon l'une quelconque des revendications 1 à 3,
**caractérisé en ce que**
chacun des deux demi-moules (2, 3) est disposé sur une plaque de serrage (13, 16), au moins une partie de l'un des deux demi-moules (2, 3) étant disposée de manière à pouvoir se déplacer par rapport à la plaque de serrage correspondante (13, 16).

5. Le moule d'injection-compression (1) selon la revendication 4,
**caractérisé en ce que**
des éléments d'écartement sollicités par ressort (27, 28, 30) sont prévus entre les plaques de serrage (13, 16), grâce auxquels les plaques de serrage (13, 16) peuvent être maintenues à distance par l'action élastique des éléments d'écartement (27, 28, 30) de telle sorte que les deux demi-moules (2, 3) soient dans la position d'injection-compression, de préférence l'un des deux demi-moules (2, 3) étant relié à la plaque de serrage correspondante (13, 16) au moyen d'une articulation pivotante.

6. Le moule d'injection-compression (1) selon la revendication 5,
**caractérisé en ce que**
le demi-moule (2, 3) mobile par rapport à la plaque de serrage correspondante (13, 16) est disposé de manière à pouvoir se déplacer librement dans une plage de mouvement prédéterminée et ce demi-moule est le demi-moule supérieur, qui, en raison de son poids, assume une distance maximale dans la position d'injection-compression par rapport à la plaque de serrage (13, 16) et/ou un élément à ressort (21) est disposé entre le demi-moule mobile et la plaque de serrage correspondante (13, 16), qui pousse le demi-moule loin de la plaque de serrage (13, 16).

7. Le moule d'injection-compression (1) selon l'une quelconque des revendications 4 à 6, **caractérisé en ce que**
au moins une ou plusieurs broches de guidage (48) sont disposées sur au moins l'une des deux plaques de serrage (13, 16), chacune pouvant s'engager dans un alésage de guidage (32) formé sur l'autre plaque de serrage (13, 16), sachant qu'un dispositif anti-perte est prévu pour empêcher la séparation complète entre la broche de guidage (48) et l'alésage de guidage correspondant (32).

8. Le moule d'injection-compression (1) pour la fabrication d'un composant en particules de mousse selon l'une quelconque des revendications 1 à 7, comprenant
**caractérisé en ce que**
l'un des deux demi-moules (2, 3) comprend une section avec une ouverture traversante (50), ladite section, dans la position d'injection-compression, délimitant une cavité formée entre les deux demi-moules (2, 3) et, dans la position fermée du moule d'injection-compression (1), reposant contre l'extérieur de l'autre demi-moule (2, 3) de telle sorte que l'ouverture traversante (50) dans la position d'injection-compression forme un passage libre dans la cavité et soit fermée dans la position fermée.

9. Le moule d'injection-compression (1) selon la revendication 8,
**caractérisé en ce que**
un bouchon est prévu pour fermer l'ouverture traversante (50), qui a essentiellement la même constante diélectrique que le matériau délimitant l'ouverture traversante (50), et/ou l'ouverture traversante (50) est conçue pour fournir des particules de mousse et/ou pour évacuer l'air.

10. Le moule d'injection-compression (1) pour la fabrication d'un composant en particules de mousse selon l'une quelconque des revendications 1 à 9,
**caractérisé en ce que**
l'un des deux demi-moules (2, 3) comprend une partie présentant une ouverture traversante (50) et pouvant être fermée par un coulisseau (73), le coulisseau étant réalisé dans un matériau ayant une permittivité et/ou un facteur de perte diélectrique similaire à celui du matériau adjacent du demi-moule correspondant (2, 3).

11. Le moule d'injection-compression (1) selon la revendication 10,
**caractérisé en ce que**
le coulisseau (73) comprend une ouverture de remplissage (74) dans laquelle débouche tangentiellement un canal (79) pour l'amenée d'un flux d'air afin de générer un tourbillon d'air.

12. Dispositif pour la fabrication d'un composant en particules de mousse, comprenant
- un moule d'injection-compression (1) selon l'une quelconque des revendications 1 à 11,
- un dispositif de transport pour amener des particules de mousse au moule d'injection-compression (1), et
- un dispositif de chauffage pour chauffer les particules de mousse dans le moule d'injection-compression (1) de manière à ce qu'elles fusionnent entre elles.

13. Le dispositif selon la revendication 12,
**caractérisé en ce que**
le dispositif de chauffage est une source de rayonnement (60) pour un rayonnement électromagnétique, en particulier un rayonnement RF, ou
le dispositif de chauffage est un dispositif (63-68) destiné à générer et à fournir de la vapeur, en particulier de la vapeur sèche saturée, au moule d'injection-compression (1).

14. Procédé de fabrication d'un composant en particules de mousse,
**caractérisé en ce que**
le composant en particules de mousse est produit à l'aide d'un moule d'injection-compression (1) selon l'une quelconque des revendications 1 à 11 ou d'un dispositif selon la revendication 12 ou 13, sachant que
le composant en particules de mousse a une forme en coin,
les particules de mousse sont disposées dans tout le composant en particules de mousse avec une densité uniforme, et les particules de mousse sont de préférence formées à partir d'un matériau élastique tel que l'eTPU.
